# EUROPÄISCHE PATENTSCHRIFT

(11) **EP 0 775 907 B1**
(45) Veröffentlichungstag und Bekanntmachung des Hinweises auf die Patenterteilung: **04.12.2002**
(21) Anmeldenummer: 96810758.1
(22) Anmeldetag: 11.11.1996
(51) Int. Cl.: G01N 21/53

(54) **Vorrichtung und Verfahren zur Trübungsmessung in einer Flüssigkeitssäule**
Method and device for turbidity measurement in a liquid column
Méthode et appareil pour mesurer la turbidité dans une colonne liquide

(30) Priorität: 24.11.1995 CH 332795
(43) Veröffentlichungstag der Anmeldung: 28.05.1997
(73) Patentinhaber: Dr. Sigrist AG, 6373 Ennetbürgen (CH)
(72) Erfinder: Christen, Rudolf, 6373 Ennetbürgen (CH)
(74) Vertreter: Groner, Manfred

(56) Entgegenhaltungen:
- CH-A- 681 747
- DE-A- 3 832 901
- FR-A- 2 577 317
- PATENT ABSTRACTS OF JAPAN vol. 005, no. 191 (P-092), 5.Dezember 1981 & JP 56 115943 A (NIPPON ATOM IND GROUP CO LTD;OTHERS: 01), 11.September 1981,

## Beschreibung

Die Erfindung betrifft eine Vorrichtung zur Trübungsmessung in einer freifallenden Flüssigkeitssäule gemäss Oberbegriff des Ansprushs 1.

Die JP 56 11 59 43A offenbart eine vorrichtung zur Trübungsmessung in einer freifallenden Flüssigkeitssäule. Eine die Flüssigkeitssäule umgebende Solarzelle bildet einen Detektor der gestentes Licht der Flüssigkeitssäule detektiert und zur Konzentrationsmessung verwendet wird.

Die CH 681 747 A offenbart eine Vierstrahltechnik zur Messung von Feststoffkonzentrationen in Flüssigkeiten, wobei durch Fenster gemessen wird. Messungen durch exakt die gleichen Fensterflächen erlauten unerwünschte Verschmutzungen der Fensterflächen wirkungovoll zu kompensieren.

Im Stand der Technik ist durch die CH-A-549 796 ein Verfahren zur Messung von in Flüssigkeit suspendierten Stoffen sowie eine Einrichtung zur Ausführung dieses Verfahrens bekannt geworden. Bei diesem Verfahren ist die Messstelle zur Messung des Streulichtes ausserhalb einer Ebene angeordnet, die durch den auf einen Flüssigkeitsstrahl gerichteten Lichtstrahl und eine durch den Schnittpunkt des Lichtstrahls mit dem Flüssigkeitsstrahl gehende und auf diesen beiden Strahlen senkrecht stehende Gerade bestimmt ist. Um grössere Reflexionen zu vermeiden, wird der Lichtstrahl bei dieser Einrichtung in einem Winkel von 25° vorwärts in den Wasserstrahl eingekoppelt. Aufgrund des nicht unerheblichen Verlustes von Energie wurde monochromatisches Licht nicht verwendet. Zur Gewährleistung einer hohen Messqualität musste eine vergleichsweise teure Optik und insbesondere zur optischen Kompensation Flimmerspiegel verwendet werden.

Der Erfindung liegt die Aufgabe zugrunde, eine Einrichtung der genannten Gattung zu schaffen, bei welcher der Anteil störender Reflexionen wesentlich vermindert ist und bei der auch bei einer Verwendung einer einfacheren Optik eine hohe Messgenauigkeit gewährleistet ist.

Die Aufgabe ist bei einer gattungsgemässen Vorrichtung gemäss Anspruch 1 gelöst. Dadurch ist eine empfindlichere Messung und die Verwendung von monochromatischem Licht mit einer Wellenlänge von beispielsweise 860 nm möglich. Ein wesentlicher Vorteil wird auch darin gesehen, dass im wesentlichen jeder Messwinkel einfacher als bisher realisiert werden kann. Da bei einem einfacheren optischen Aufbau der Energieverlust geringer ist, kann grundsätzlich anstelle von Weisslicht monochromatisches Licht verwendet werden. Wesentlich ist zudem, dass wie beim obengenannten Stand der Technik an einem freifallenden Wasserstrahl gemessen werden kann. Bei der erfindungsgemässen Vorrichtung sind somit keine Messzellenfenster notwendig und damit ist eine mögliche Fensterverschmutzung bei höheren Trübungen vermieden.

Das erfindungsgemässe Verfahrenen ergibt sich aus Anspruch 4. Durch die Einkoppelung in Längsrichtung des Wasserstrahles und die Messung des Streulichtes unter einem Winkel von 90° können Störlichter optimal von der Messvorrichtung ferngehalten werden. Es hat sich gezeigt, dass auch bei Einsatz von einfachen und damit kostengünstigeren Lichtquellen und Detektoren ein grosser Messumfang und zudem eine hohe Auflösung in empfindlichen Messbereichen gewährleistet ist. So kann beispielsweise Trinkwasser im Bereich von 0,05 bis 0,2 FTU gemessen werden.

Bei der vorbekannten Vorrichtung nach dem obengenannten Stand der Technik war ein Farbeinfluss nur einigermassen dadurch vermieden, dass das Streulicht wie auch das Primärlicht in etwa den gleichen Weg in der Flüssigkeit zurücklegten und durch ein Kompensationsverfahren deren Abschwächung in Farbe erfasst wurde. Durch die nun hier vorgeschlagene Messung ist eine Farbkompensation in weitgehendem Masse möglich.

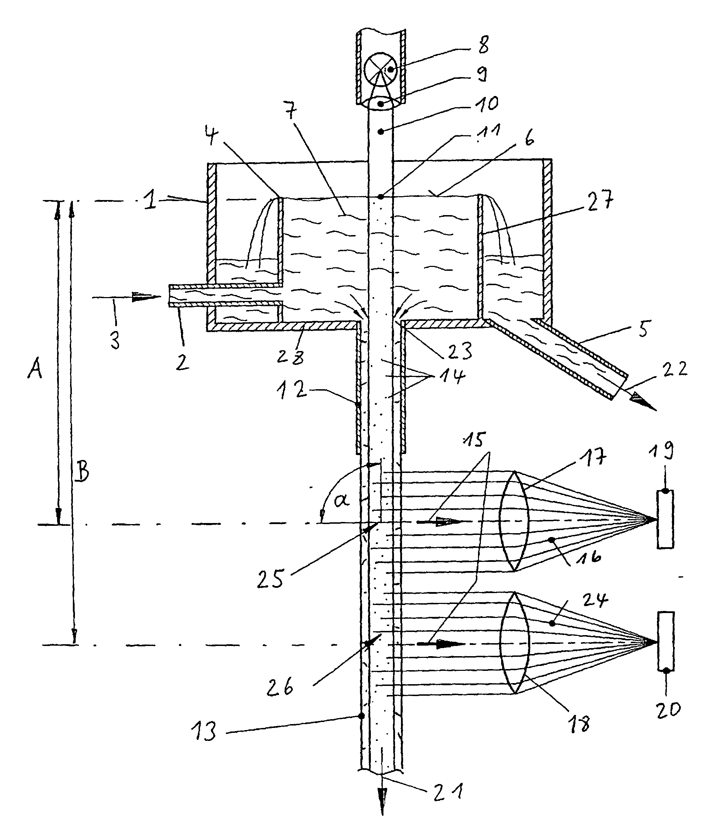

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der einzigen Zeichnung näher erläutert. Die Zeichnung zeigt schematisch einen Längsschnitt durch eine erfindungsgemässe Vorrichtung.

In einem oben offenen Flüssigkeitsgefäss 1 ist ein kleineres und oben ebenfalls offenes Gefäss 27 angeordnet, das eine Ueberlaufkante 4 sowie einen Stutzen 2 zum Zuführen der zu messenden Flüssigkeit 7 aufweist. In einem Boden 28 des Gefässes 1 ist eine Düse 12 angeordnet, durch die in das Gefäss 27 eingeleitete Flüssigkeit 7 als freifallender Strahl 13 verlässt. Damit ein konstanter Flüssigkeitsstrahl gewährleistet ist, wird in Richtung des Pfeils 3 ständig soviel Flüssigkeit 7 zugeführt, dass auf der Höhe der Ueberlaufkante 4 ständig eine Flüssigkeitsoberfläche 6 besteht. Das Niveau der Flüssigkeitsoberfläche 6 ist konstant auf der Höhe der Kante 4. Ueberlaufendes Wasser wird durch einen Stutzen 5 in Richtung des Pfeils 22 abgeführt. Die Düse 12 kann ein einfaches Rohrstück sein, das eine Eingangsöffnung 23 besitzt, durch die Flüssigkeit 7 aus dem Gefäss 27 in die Düse 12 fliesst.

Ueber der Flüssigkeitsoberfläche 6 ist eine Lichtquelle 8 angeordnet, die beispielsweise eine LED ist, die ein monochromatisches Licht mit einer Wellenlänge von vorzugsweise etwa 860 nm abgibt. Mittels einer Optik 9 wird von der Lichtquelle 8 abgegebenes Licht zu einem Primärlichtstrahl 10 gebündelt, der senkrecht zur Flüssigkeitsoberfläche 6 in die Flüssigkeit 7 eingekoppelt wird. Der Primärlichtstrahl 10 ist so eingekoppelt, dass er durch die Oeffnung 23 achsial in den frei fallenden Wasserstrahl 13 einfällt.

Sind in der Flüssigkeit 7 eine Trübung verursachende suspendierte Stoffe, beispielsweise mineralische Stoffe oder Mikroorganismen wie beispielsweise Hefezellen oder Bakterien vorhanden, so wird das eingekoppelte Primärlicht an diesen Stoffen gestreut. Zur Messung eines Teiles dieses Streulichtes sind im Abstand zum freifallenden Flüssigkeitsstrahl 13 zwei Detektoren 19 und 20 angeordnet, die in Längsrichtung des Flüssigkeitsstrahls 13 versetzt sind, wie in der Zeichnung gezeigt ist. Die Detektoren 19 und 20 messen jeweils unter einem Messwinkel a von beispielsweise 90° das in Richtung der Pfeile 15 bzw. 16 ausgekoppelte und jeweils mit einer Optik 17 bzw. 18 fokusiertes Streulicht 16 bzw. 24. Die Detektoren 19 und 20 sind so angeordnet, dass zwei Auskoppelungsstellen 25 und 26 unterschiedliche Abstände A bzw. B zur Einkoppelungsstelle 11 aufweisen.

Ist in der Flüssigkeit 7 ein Farbstoff gelöst, so wird im Flüssigkeitsstrahl 13 ein Teil des Primärlichtstrahls 10 durch diesen Farbstoff absorbiert. Durch die Absorption zwischen den beiden Auskoppelungsstellen 25 und 26 entstehen an den beiden Detektoren 19 und 20 unterschiedliche Messwerte. Mit Hilfe des Lambert-Beerschen Gesetzes kann der Farbeinfluss berechnet und eliminiert werden.

Für die Erfindung ist wesentlich, dass die Einkoppelungsstelle 11, die sich unterhalb der Optik 9 an der Flüssigkeitsoberfläche 6 befindet, räumlich von den Auskoppelungsstellen 25 und 26 getrennt ist. Störlichter an der Einkoppelungsstelle 11 können deshalb nicht zu den Detektoren 19 und 20 gelangen, was die Auflösung wesentlich verbessert. Obwohl je zwei Detektoren 19 und 20 verwendet werden, können die Kosten durch den Einsatz von einer vergleichsweise einfachen Optik die Herstellungskosten der erfindungsgemässen Vorrichtung bei zumindest gleichbleibender Messqualität vermindert werden. Gleichzeitig ist bei minimalen Wartungsanforderungen ein grosser Messumfang und eine hohe Auflösung in empfindlichen Messbereichen, die beispielsweise beim Messen von Trinkwasser erforderlich ist, gewährleistet.

Denkbar ist auch eine Ausführung, bei welcher der freifallende Flüssigkeitsstrahl durch eine stehende oder im wesentlichen stehende Flüssigkeitssäule ersetzt ist.

## Patentansprüche

1. Vorrichtung zur Trübungsmessung in einer freifallenden Flüssigkeitssaule (13) mit Mitteln zur Herstellung der Flüssigkeitssäule (13), mit einer Lichtquelle (8) und wenigstens einer Messvorrichtung (19, 20), die mindestens einen Teil des Lichts aufnimmt, das von den in der Flüssigkeit suspendierten Teilchen (14) gestreut wird, welches Licht (10) achsial zur freifallenden Flüssigkeitssäule (13) in diese eingekoppelt wird, **dadurch gekennzeichnet, dass** wenigstens zwei Messvorrichtungen (19, 20) so angeordnet sind, dass die Zentren zweier Auskoppelungsstellen (25, 26) unterschiedliche Abstände (A, B) zur Einkoppelungsstelle (11) aufweisen und beide Messvorrichtungen (19, 20) jeweils mindestens einen Teil des ausgekoppelten Lichtes aufnehmen, wobei diese Teile jeweils mit einem optischen Element (17, 18) auf die entsprechende Messvorrichtung fokussiert werden.

2. Vorrichtung nach Anspruch 1, **dadurch gekennzeichnet, dass** die Einkoppelungsstelle (11) sich an der Wasseroberfläche (6) eines Ueberlaufgefässes (27) befindet.

3. Vorrichtung nach Anspruch 2, **dadurch gekennzeichnet, dass** das Ueberlaufgefäss (27) an einem Boden (28) eine Düse (12) aufweist, durch welche Düse (12) im Gefäss (27) befindliche Flüssigkeit (7) dieses Gefäss (27) als die genannte frei fallende Wassersäule (13) verlässt.

4. Verfahren zur Trübungsmessung in einer freifallenden Flüssigkeitssäule (13) mit einer Vorrichtung nach Anspruch 1, bei dem die freifallende Flüssigkeitssäule (13) beleuchtet und das von suspendierten Stoffen (14) der freifallenden Flüssigkeitssäule (13) gestreute Licht gemessen wird, wobei die freifallende Flüssigkeitssäule (13) so beleuchtet wird, dass das in die freifallende Flüssigkeitssäule eingekoppelte Licht (10) wenigstens bereichsweise achsial zur Längsrichtung der freifallenden Flüssigkeitssäule (13) in dieser verläuft, **dadurch gekennzeichnet, dass** das gestreute und mit den wenigstens zwei optischen Elementen (17, 18) fokussierte Licht (16, 24) im Abstand zur Einkoppelungsstelle (11) mit den wenigstens zwei Messeinrichtungen (19, 20) gemessen wird und mit Hilfe des Lambert-Beerschen Gesetzes und den Abständen (A, B) zwischen den Zentren von Ein- und Auskoppelungsstellen die Lichtabsorption berechnet und eliminiert wird.

5. Verfahren nach Anspruch 4, **dadurch gekennzeichnet, dass** die zu messende Flüssigkeit (7) stetig einem Ueberlaufgefäss (27) zugeführt wird, dass Primärlicht (10) an der Flüssigkeitsoberfläche (6) des Ueberlaufgefässes (27) eingekoppelt wird und dass in das Ueberlaufgefäss (27) eingeleitete Flüssigkeit (7) als freifallende Flüssigkeitssäule (13) ausfliesst.

## Claims

1. Device for turbidity measurement in a free-falling liquid column (13), having means for producing the liquid column (13), having a light source (8) and at least one measuring device (19, 20), which picks up at least a portion of the light which is scattered by the particles (14) suspended in the liquid, which light (10) is coupled into the free-falling liquid column (13) in an axial fashion therewith, **characterized in that** at least two measuring devices (19, 20) are arranged such that the centres of two outcoupling points (25, 26) have different spacings (A, B) from the incoupling point (11), and the two measuring devices (19, 20) in each case take up at least a portion of the coupled-out light, these portions being focused in each case onto the corresponding measuring device with the aid of an optical element (17, 18).

2. Device according to Claim 1, **characterized in that** the incoupling point (11) is located at the water surface (6) of an overflow vessel (27).

3. Device according to Claim 2, **characterized in that** the overflow vessel (27) has a nozzle (12) at a bottom (28), through which nozzle (12) liquid (7) located in the vessel (27) leaves the said vessel (27) as the said free-falling water column (13).

4. Method for turbidity measurement in a free-falling liquid column (13) having a device according to Claim 1, in which the free-falling liquid column (13) is illuminated and the light scattered by suspended materials (14) in the free-falling liquid column (13) in measured, the free-falling liquid column (13) being illuminated such that the light (10) coupled into the free-falling liquid column runs in the latter at least partially in an axial fashion relative to the longitudinal direction of the free-falling liquid column (13), **characterized in that** the scattered light (16, 24), which is focused with the aid of the at least two optical elements (17, 18), is measured at a spacing from the incoupling point (11) with the aid of the at least two measuring devices (19, 20), and the light absorption is calculated and eliminated using the Beer-Lambert law and the spacings (A, B) between the centres of incoupling and outcoupling points.

5. Method according to Claim 4, **characterized in that** the liquid (7) to be measured is continuously fed into an overflow vessel (27), **in that** primary light (10) is coupled in at the liquid surface (6) of the overflow vessel (27), and **in that** liquid (7) introduced into the overflow vessel (27) flows out as free-falling liquid column (13).

## Revendications

1. Dispositif pour la mesure de la turbidité dans une colonne de liquide (13) tombant librement, comprenant des moyens de fabrication de la colonne liquide (13), une source de lumière (8) et au moins un dispositif de mesure (19, 20), qui reçoit au moins une partie de la lumière qui est diffusée par les particules (14) en suspension dans le liquide, laquelle lumière (10) est introduite axialement dans la colonne de liquide (13) tombant librement, **caractérisé en ce qu'**au moins deux dispositifs de mesure (19, 20) sont disposés de telle sorte que les centres de deux points de sortie (25, 26) présentent des distances différentes (A, B) par rapport au point d'introduction (11) et les deux dispositifs de mesure (19, 20) reçoivent chacun au moins une partie de la lumière en sortie, ces parties étant chacune concentrées avec un élément optique (17, 18) sur le dispositif de mesure correspondant.

2. Dispositif selon la revendication 1, **caractérisé en ce que** le point de sortie (11) se trouve au niveau de la surface de l'eau (6) d'un récipient de débordement (27).

3. Dispositif selon la revendication 2, **caractérisé en ce que** le récipient de débordement (27) présente sur un fond (28) une buse (12) à travers laquelle buse (12) le liquide (7) se trouvant dans le récipient (27) quitte ce récipient (27) sous forme de ladite colonne d'eau (13) tombant librement.

4. Procédé de mesure de la turbidité dans une colonne de liquide (13) tombant librement, comprenant un dispositif selon la revendication 1, dans lequel la colonne de liquide (13) tombant librement est éclairée et la lumière diffusée par les substances en suspension (14) de la colonne de liquide (13) tombant librement est mesurée, la colonne de liquide (13) tombant librement étant éclairée de telle sorte que la lumière (10) introduite dans la colonne de liquide tombant librement soit'orientée dans celle-ci au moins par zones axialement par rapport à la direction longitudinale de la colonne de liquide (13) tombant librement et la lumière (16, 24) diffusée et concentrée avec les au moins deux éléments optiques (17, 18) est mesurée à une distance du point d'introduction (11) avec les au moins deux dispositifs de mesure (19, 20) et à l'aide de la loi de Beer-Lambert et des distances (A, B) entre les centres des points d'introduction et de sortie, on calcule et on élimine l'absorption de la lumière.

5. Procédé selon la revendication 4, **caractérisé en ce que** le liquide (7) à mesurer est amené constamment à un récipient de débordement (27), **en ce que** la lumière primaire (10) est introduite à la surface du liquide (6) du récipient de débordement (27) et **en ce que** le liquide (7) introduit dans le récipient de débordement (27) en sort sous la forme de la colonne de liquide (13) tombant librement.
